# EUROPEAN PATENT APPLICATION

(11) **EP 4 775 296 A1**
(43) Date of publication of application: **15.07.2026**
(21) Application number: 25150748.9
(22) Date of filing: 08.01.2025
(51) Int. Cl.: B01D 53/94, B01J 29/68, B01J 29/76, B01J 29/83, B01J 35/00, B01J 35/57, B01J 37/02, F01N 3/035, F01N 3/20

(54) **CATALYTIC PARTICULATE FILTER**

(71) Applicant: Johnson Matthey Public Limited Company, London EC2V 7AD (GB)
(72) Inventor: FOSCHI, Francesco, Royston, SG8 5HE (GB); NOORIZADEH, Hannah, Royston, SG8 5HE (GB); REID, Stuart, Royston, SG8 5HE (GB); ST HILL, Keimoy, Royston, SG8 5HE (GB); TETLAY, Abdulwaris, 65843 Sulzbach (DE); WALTON, Mark, Royston, SG8 5HE (GB); WIJEMANNE, Thilanka, Royston, SG8 5HE (GB)
(74) Representative: Johnson Matthey Public Limited Company

(57) **Abstract**

The present invention provides a catalyst article for the treatment of exhaust gas, the catalyst article comprising:
a wall-flow filter substrate having porous walls and having a first face and a second face defining a longitudinal direction therebetween from an inlet end to an outlet end of the catalyst article and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
a first coating disposed on the first plurality of inner surfaces and/or within the porous walls, and extending from the first face; and
a second coating disposed on the second plurality of inner surfaces and/or within the porous walls, and extending from the second face;
wherein the first coating comprises an Fe-loaded molecular sieve having an FER Framework Type and the second coating comprises a Cu-loaded molecular sieve having a CHA Framework Type and/or a Cu-loaded molecular sieve having an AEI Framework Type. The catalyst article is able to provide a good balance of high NO₂ conversion, high overall NOₓ conversion and low NH₃ slip, while having good N₂O selectivity, at both low and high temperatures.

## Description

The present invention relates to a catalyst article that is a catalytic particulate filter for the treatment of exhaust gas, particularly a catalytic diesel particulate filter (DPF) for the treatment of exhaust gas from a diesel engine or a catalytic particulate filter for the treatment of exhaust gas from an H₂ internal combustion engine. The present invention also relates to a method of manufacturing such a catalyst article, an emission treatment system for the treatment of exhaust gas and a method of treating exhaust gas. The catalyst article is able to provide a good balance of high NO₂ conversion, high overall NOₓ conversion and low NH₃ slip, while having good N₂O selectivity, at both low and high temperatures.

Particulate filters are an emission after-treatment technology developed to control particulate emissions from internal combustion engines. Most early particulate filter applications included an uncoated particulate filter positioned downstream of a catalyst article, such as a selective catalytic reduction (SCR) catalyst, a diesel oxidation catalyst (DOC) or a hydrogen oxidation catalyst (HOC), for example. As the technology matured, particulate filters have been coated with catalytically active coatings to provide catalytic particulate filters, such as catalytic DPFs. However, the combination of the catalytically active coatings on a filter body does introduce additional issues such as undue back-pressure, and there are requirements for minimum CO, NOₓ and HC conversion properties. In addition, there are cost considerations with a need to provide the best possible balance of performance to cost.

There is a continued need for improving technologies to provide catalytic particulate filters that have good all-round performance in a variety of exhaust gas conditions, i.e. improving certain catalytic performance properties (such as SCR performance) without compromising on other catalytic performance properties or introducing undue backpressure. As such, the technologies developed for flow-through substrates are not necessarily directly applicable to catalytic particulate filters, and further research and development is required.

The present invention seeks to tackle at least some of the problems associated with the prior art or at least to provide a commercially acceptable alternative solution thereto. In particular, it is an object of the present invention to provide catalytic particulate filter (i.e. a catalyst article in which the substrate is a wall-flow filter substrate) that can provide a good balance of high NO₂ conversion, high overall NOₓ conversion and low NH₃ slip, while having good N₂O selectivity, at both low and high temperatures.

Specifically, in a first aspect, the present invention provides a catalyst article for the treatment of exhaust gas, the catalyst article comprising:
a wall-flow filter substrate having porous walls and having a first face and a second face defining a longitudinal direction therebetween from an inlet end to an outlet end of the catalyst article and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
a first coating disposed on the first plurality of inner surfaces and/or within the porous walls, and extending from the first face; and
a second coating disposed on the second plurality of inner surfaces and/or within the porous walls, and extending from the second face;
wherein the first coating comprises an Fe-loaded molecular sieve having an FER Framework Type and the second coating comprises a Cu-loaded molecular sieve having a CHA Framework Type and/or a Cu-loaded molecular sieve having an AEI Framework Type.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Without wishing to be bound by theory, it is thought that the Fe-based catalyst may provide good NO₂ conversion upstream of the Cu-based catalyst, which may then provide good NO conversion and better ammonia storage. However, the inventors have surprisingly found that the combination of these two particular catalysts in this configuration provides a good balance of high NO₂ conversion, high overall NOₓ conversion and low NH₃ slip, while having good N₂O selectivity, at both low and high temperatures. The term "good N₂O selectivity" as used herein means that the catalyst article shows low selectivity to the formation of N₂O after flowing the exhaust gas through the catalyst article.

The term "catalyst article" used herein may encompass an article in which a catalyst is supported thereon or therein.

The term "wall-flow filter" is a term of art well known to the skilled reader. Any suitable wall-flow filter substrate may be used in the present invention. For example, the wall-flow filter substrate can be a ceramic, e.g., silicon carbide, cordierite, aluminium nitride, silicon nitride, aluminium titanate, alumina, mullite, pollucite, a magnesium aluminosilicate, or composites comprising segments of any two or more thereof. Cordierite, aluminium titanate, and silicon carbide are particularly preferred.

The (uncoated) wall-flow filter substrate suitable for use in the present invention typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The wall-flow filter substrate typically comprises a cell density of from 60 to 450 cells per square inch (cpsi). It is preferred that the wall-flow filter substrate comprises a cell density of from 100 to 400 cpsi, more preferably from 200 to 350 cpsi. The wall-flow filter substrate monolith may have a wall thickness (e.g. average internal wall thickness) of from 0.20 to 0.50 mm, preferably from 0.25 to 0.35 mm (e.g. about 0.30 mm). The wall flow filter substrate may have a symmetric cell design or an asymmetric cell design.

The term "inlet end" as used herein indicates the intended upstream end of the catalyst article when used in an emission treatment system, relative to the direction of travel of the exhaust gas through the emission treatment system. That is, the inlet end is the end of the catalyst article closest to the engine, based on the path of the exhaust gas. Correspondingly, the term "outlet end" as used herein indicates the intended downstream end of the catalyst article when used in an emission treatment system, relative to the direction of travel of the exhaust gas through the emission treatment system. That is, the outlet end is the end of the catalyst article farthest from the engine, based on the path of the exhaust gas. As such, in use, the exhaust gas is intended to flow through the catalyst article from the inlet end to the outlet end.

The relative terms "first", "second", etc. when used in relation to layers or coatings herein are simply labels used in order to distinguish the layers and are not intended to indicate the relative arrangement of the coatings or other features, unless stated otherwise.

The first coating is disposed on the first plurality of inner surfaces and/or within the porous walls, and extends from the first face, and the second coating is disposed on the second plurality of inner surfaces and/or within the porous walls, and extends from the second face. As will be appreciated by the skilled reader in view of the context of the invention, the first coating and the second coating as described herein are therefore distinct from one another. By "disposed on" it is meant that the coating is directly disposed on the substrate, i.e. with no intervening material, and/or indirectly disposed on the substrate, i.e. with intervening material, such another coating. The term "disposed on" encompasses having the (first/second) coating disposed on the (first/second) plurality of inner surfaces (i.e. be located "on-wall"). The term "disposed on" may also encompass having the (first/second) coating disposed therein, for example within the pores of the substrate (e.g. "in-wall", within the porous walls). In other words, the term "disposed on" the substrate means that the (first/second) coating may be disposed thereon and/or therein. In other words, the coating may be "in-wall", "on-wall", or both "in wall" and "on wall".

As will be appreciated, the first coating may extend from the first face for from 1 to 100% of the length of the first plurality of channels, such as from 5 to 95% of the length of the first plurality of channels, from 10 to 90% of the length of the first plurality of channels, from 20 to 80% of the length of the first plurality of channels, from 30 to 70% of the length of the first plurality of channels or from 40 to 60% of the length of the first plurality of channels. Similarly, the second coating may extend from the second face for from 1 to 100% of the length of the second plurality of channels, such as from 5 to 95% of the length of the second plurality of channels, from 10 to 90% of the length of the second plurality of channels, from 20 to 80% of the length of the second plurality of channels, from 30 to 70% of the length of the second plurality of channels or from 40 to 60% of the length of the second plurality of channels. Where the first and second coatings overlap, it is preferred that the first coating is the upper coating, relative to the substrate.

It will be appreciated that by defining the molecular sieves by their Framework Type Codes it is intended to include the "Type Material" and any and all isotypic framework materials (the "Type Material" is the species first used to establish the framework type). For further information, the reader is directed to the website of the International Zeolite Association at www.iza-online.org.

The term "metal-loaded" as used herein in the context of a metal- (such as Fe and/or Cu) molecular sieve may encompass that the molecular sieve is metal-promoted with the metal, wherein the metal may be loaded into the molecular sieve. In a metal-loaded molecular sieve, the loaded metal is a type of "extra-framework metal", that is, a metal that resides within the molecular sieve and/or on at least a portion of the molecular sieve surface. This definition does not include atoms constituting the framework of the molecular sieve.

Metal-loaded molecular sieves, in general, and methods of manufacturing such metal-loaded molecular sieves, are known to the skilled reader. For example, several methods have been mentioned in the literature for preparing metal-loaded molecular sieves, in particular metal-loaded zeolites. The direct synthesis of metal-loaded zeolites is a complicated process and depends on the synthesis conditions (see M. Moliner, ISRN Materials Science, 2012, Article ID 789525). An alternative is to use a commercial zeolite support and to subsequently add metal by post-synthesis treatment of the zeolite, for example, by wet impregnation, wet ion exchange or solid-state ion exchange.

Known wet ion-exchange methods for the addition of metal to molecular sieves (e.g. zeolites) typically employ soluble metal salts, such as metal acetates, metal sulphates or metal chlorides, as the active metal precursor, wherein the active metal precursor is reacted with the molecular sieve in aqueous solution. In order to accelerate ion-exchange, such processes typically require a heating step, wherein the mixture may be heated to a temperature in the range 70 to 80°C for up to several hours.

The term "molecular sieve" as used herein is well known to the skilled reader and may encompass crystalline or quasi-crystalline materials which can be, for example aluminosilicates (zeolites) or silicoaluminophosphates (SAPOs). Such molecular sieves are constructed of repeating SiO₄, AlO₄, and optionally PO₄ tetrahedral units linked together, for example in rings, to form frameworks having regular intra-crystalline cavities and channels of molecular dimensions. The specific arrangement of tetrahedral units (ring members) gives rise to the molecular sieve's framework, and by convention, each unique Framework Type is assigned a unique three-letter code (e.g., "CHA") by the International Zeolite Association (IZA).

Molecular sieves may exist as "H⁺-form" or "NH₄⁺-form" molecular sieves, for example. The term "H⁺-form" in relation to a molecular sieve refers to a molecular sieve having an anionic framework wherein the charge of the framework is counterbalanced by protons (i.e. H⁺ cations). The term "NH₄⁺-form" in relation to a molecular sieve refers to a molecular sieve having an anionic framework wherein the charge of the framework is counterbalanced by ammonium cations (NH₄⁺ cations). When metal-loaded (e.g. Fe- and/or Cu-loaded), these molecular sieves are no longer considered to be in their "H⁺-form" or "NH₄⁺-form".

Molecular sieves (e.g. zeolites) may also be categorised by pore size, e.g. a maximum number of tetrahedral atoms present in a molecular sieve's framework. As defined herein, a "small-pore" molecular sieve, such as CHA or AEI, contains a maximum ring size of eight tetrahedral atoms, whereas a "medium-pore" molecular sieve, e.g. FER, contains a maximum ring size of ten tetrahedral atoms; and a "large-pore" molecular sieve, such as BEA, contains a maximum ring size of twelve tetrahedral atoms.

It is preferable that each "coating" has a substantially uniform composition (i.e. there is no substantial difference in the composition of the coating when comparing one part of the region occupied by the coating with another part of that region, on average). Substantially uniform composition in this context refers to a material (e.g., region) where the difference in composition when comparing one part of the region with another part of the region is 5% or less, usually 2.5% or less, and most commonly 1% or less, for each component of the coating on a wt.% basis relative to the total weight of the part of the region. In other words, preferably, in an arbitrarily selected region of the coating, the content of each component of the coating, in wt.% relative to the total weight of the arbitrarily selected region of the coating, is within 5%, usually within 2.5%, most commonly within 1 %, and even more preferably within 0.1%, of the total wt.% of that component of the coating in the coating.

Preferably, the first coating does not comprise a Cu-loaded molecular sieve having a CHA Framework Type or a Cu-loaded molecular sieve having an AEI Framework Type, and/or the second coating does not comprise an Fe-loaded molecular sieve having an FER Framework Type. More preferably, the first coating comprises an Fe-loaded molecular sieve having an FER Framework Type as the only metal-loaded molecular sieve, and/or the second coating comprises a Cu-loaded molecular sieve having a CHA Framework Type and/or a Cu-loaded molecular sieve having an AEI Framework Type as the only metal-loaded molecular sieve(s). That is, any metal-loaded molecular sieve present in the first coating preferably consists of an Fe-loaded molecular sieve having an FER Framework Type and/or any metal-loaded molecular sieve present in the second coating preferably consists of a Cu-loaded molecular sieve having a CHA Framework Type and/or a Cu-loaded molecular sieve having an AEI Framework Type.

The invention will now be described in relation to the following non-limiting drawings in which:
Figure 1 shows a configuration of the first coating and the second coating according to one embodiment of the invention.
Figure 2 shows a configuration of the first coating and the second coating according to an alternative embodiment of the invention.

The catalyst article of the invention may be particularly suited to the treatment of exhaust gas from a diesel engine. Accordingly, preferably, the catalyst article is for the treatment of exhaust gas from a diesel engine. In other words, preferably, the catalyst article is a diesel particulate filter (DPF).

The catalyst article of the invention may also be particularly suited to the treatment of exhaust gas from an H₂ internal combustion engine. Accordingly, preferably, the catalyst article is for the treatment of exhaust gas from an H₂ internal combustion engine.

Without wishing to be bound by theory, it is also thought that the selection of an Fe/FER catalyst (i.e., an Fe-loaded molecular sieve having an FER Framework Type) may increase the hydrocarbon tolerance of the catalyst article, i.e. the resistance of the catalyst article to having hydrocarbons present in the exhaust gas being treated becoming "stuck" in the pores of the molecular sieve. This is because the molecular sieve having an FER Framework Type is a medium-pore molecular sieve. By contrast, large-pore molecular sieves, such as of the BEA Framework Type, may be less hydrocarbon tolerant. Moreover, if a small-pore molecular sieve is used, then loading of the Fe onto the molecular sieve by Fe-exchange methods may not be as effective. The use of such an Fe/FER catalyst may therefore be particularly desirable for use in DPF applications. The Cu-CHA and/or Cu-AEI molecular sieve(s) may also have good hydrocarbon tolerance, since the molecular sieve having a CHA Framework Type and the molecular sieve having an AEI Framework Type are each a small-pore molecular sieve.

Preferably, the molecular sieve having a CHA Framework Type comprises one or more of AIPO-34, [Al-As-O]-CHA, [Al-Co-P-O]-CHA, |Co| [Be-P-O]-CHA, |Co₃ (C₆N₄H₂₄)₃ (H₂O)₉| [Be₁₈P₁₈O₇₂]-CHA, [Co-Al-P-O]-CHA, |Li-Na| [Al-Si-O]-CHA, [Mg-Al-P-O]-CHA, [Si-O]-CHA, [Zn-Al-P-O]-CHA, [Zn-As-O]-CHA, CoAPO-44, CoAPO-47, DAF-5, GaPO-34, K-Chabazite, Linde D, Linde R, LZ-218, MeAPO-47, MeAPSO-47, (Ni(deta)₂)-UT-6, Phi, SAPO-34, SAPO-47, SSZ-13, UiO-21, Willhendersonite, ZK-14, ZYT-6, more preferably one or more of SAPO-34, AlPO-34 and SSZ-13.

Preferably, the molecular sieve having a CHA Framework Type is synthetic, i.e., a synthetic CHA molecular sieve, such as a synthetic CHA aluminosilicate molecular sieve (e.g., SSZ-13) and/or a synthetic CHA aluminophosphate molecular sieve (e.g., SAPO-34), more preferably a synthetic CHA aluminosilicate molecular sieve.

Preferably, the molecular sieve having an AEI Framework Type comprises one or more of AIPO-18, [Co-Al-P-O]-AEI, SAPO-18, SIZ-8 and SSZ-39, more preferably SAPO-18 and/or SSZ-39, even more preferably SSZ-39.

Preferably, the molecular sieve having an AEI Framework Type is synthetic, i.e., a synthetic AEI molecular sieve, such as a synthetic AEI aluminosilicate molecular sieve (e.g., SSZ-39) and/or a synthetic AEI aluminophosphate molecular sieve (e.g., SAPO-18), more preferably a synthetic AEI aluminosilicate molecular sieve.

Preferably, the molecular sieve having an FER Framework Type is synthetic, i.e., a synthetic FER molecular sieve, such as a synthetic FER aluminosilicate molecular sieve and/or a synthetic FER aluminophosphate molecular sieve, more preferably a synthetic FER aluminosilicate molecular sieve, such as synthetic ferrierite.

Preferably, each molecular sieve is a zeolite. Preferably, the molecular sieve having an FER Framework Type comprises, more preferably is, ferrierite; and/or the molecular sieve having a CHA Framework Type comprises, more preferably is, SSZ-13; and/or the molecular sieve having an AEI Framework Type comprises, more preferably is, SSZ-39.

Preferably, the second coating comprises a Cu-loaded molecular sieve having a CHA Framework Type.

Preferably, the Fe-loaded molecular sieve having an FER Framework Type comprises from 1 to 5 wt.% Fe, more preferably from 2 to 4 wt.% Fe, even more preferably from 2.5 to 3.5 wt.% Fe, still more preferably from 2.7 to 3.3 wt.% Fe, yet still more preferably from 2.9 to 3.1 wt.% Fe or even about 3 wt.% Fe, based on the total weight of the Fe and the molecular sieve. Such a loading of the Fe has been found to provide particularly good properties as described herein.

The Fe-loaded molecular sieve having an FER Framework Type preferably has a D90 of from 0.1 to 25 µm, more preferably from 1 to 10 µm, even more preferably from 2 to 6 µm. The Fe-loaded molecular sieve having an FER Framework Type preferably has a D50 of from 0.05 to 10 µm, more preferably from 0.5 to 7 µm, even more preferably from 1 to 4 µm. The Fe-loaded molecular sieve having an FER Framework Type preferably has a D10 of from 0.01 to 5 µm, more preferably from 0.3 to 2 µm, even more preferably from 0.4 to 0.9 µm.

Particle size distributions of solid particles can be characterized by the D10, D50 and D90 measurements. In each case the number indicates the percentage by volume of particles smaller than the recited value. In other words, a D90 of 1 µm means that 90% of the particles are smaller than 1 µm in diameter. By knowing a D10 and a D90, the range of particles in a distribution of particles can be defined. The characterization of the particle size of a sample by its D10 and D90 values generally defines the breadth of the particle-size distribution. The closer these values are, the narrower the distribution of particle sizes.

The particle size measurements necessary to obtain D10, D50 and D90 values of solid particles such as the molecular sieves present in the coatings of the invention can be obtained by Laser Diffraction Particle Size Analysis using a Malvern Mastersizer 3000, which is a volume-based technique (i.e., D50 and D90 may also be referred to as Dv50 and Dv90 (or D(v,0.50) and D(v,0.90)) and applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts. It will be appreciated that any Dv or mean values disclosed in relation to a given component are with respect to that component before it is incorporated into the (first or second) washcoat slurry/coating. This is because calcination may change the particle size distribution.

Preferably, the Cu-loaded molecular sieve having a CHA Framework Type and/or the Cu-loaded molecular sieve having an AEI Framework Type comprises from 1 to 5 wt.% Cu, more preferably from 2 to 4.5 wt.% Cu, even more preferably from 2.5 to 4 wt.% Cu, still more preferably from 3 to 3.6 wt.% Cu, yet still more preferably from 3.1 to 3.5 wt.% Cu or even about 3.3 wt.% Cu, based on the total weight of the Cu and the molecular sieve. Such a loading of the Cu has been found to provide particularly good properties as described herein.

The Cu-loaded molecular sieve having a CHA Framework Type preferably has a D90 of from 0.1 to 25 µm, more preferably from 1 to 10 µm, even more preferably from 2 to 6 µm. The Cu-loaded molecular sieve having a CHA Framework Type preferably has a D50 of from 0.5 to 15 µm, more preferably from 0.75 to 8 µm, even more preferably from 1.5 to 6 µm. The Cu-loaded molecular sieve having a CHA Framework Type preferably has a D10 of from 0.25 to 10 µm, more preferably from 0.5 to 6 µm, even more preferably from 0.6 to 3.5 µm.

The Cu-loaded molecular sieve having an AEI Framework Type preferably has a D90 of from 0.1 to 25 µm, more preferably from 1 to 10 µm, even more preferably from 2 to 6 µm. The Cu-loaded molecular sieve having an AEI Framework Type preferably has a D50 of from 0.4 to 12 µm, more preferably from 0.6 to 6.5 µm, even more preferably from 1.0 to 5 µm. The Cu-loaded molecular sieve having an AEI Framework Type preferably has a D10 of from 0.2 to 8 µm, more preferably from 0.3 to 4.5 µm, even more preferably from 0.35 to 3 µm.

Preferably, the second coating is disposed within the porous walls and extends from the second face (outlet end) for at least 50% of a length of the second plurality of channels. In other words, the second coating is preferably an "in-wall" coating. In such embodiments, it may happen that a small amount of the second coating may be present on the first plurality of inner surfaces and/or the second plurality of inner surfaces, but this should be avoided as much as possible. Preferably, at least 80 wt.% of the second coating is within the porous walls, more preferably at least 90 wt.%, still more preferably at least 95 wt.%. Preferably, the second coating extends from the second face (outlet end) for at least 60% of a length of the second plurality of channels, more preferably for at least 70% of a length of the second plurality of channels, even more preferably for at least 80% of a length of the second plurality of channels. Such an arrangement has been found to provide particularly good properties as described herein, in particular while avoiding imparting too much backpressure on the system.

Preferably, the loading of the second coating on the wall-flow filter substrate is from 0.5 to 3 g/in³, more preferably from 1 to 2 g/in³, even more preferably 1.2 to 1.8 g/in³, still more preferably 1.3 to 1.7 g/in³, based on the total volume of the substrate. Such a loading of the second coating, particularly when an "in-wall" coating, has been found to provide particularly good properties as described herein, in particular while avoiding imparting too much backpressure on the system.

The term "loading" as used herein has the conventional meaning in the art. That is, the loading of a coating or substance is defined as the weight of the coating or substance after calcination relative to the total volume of the uncoated wall-flow filter.

Preferably, the first coating is porous coating, is disposed on the first plurality of inner surfaces and extends from the first face (inlet end) for at least 50% of a length of the first plurality of channels. In other words, the first coating is preferably a porous "on-wall" coating. Preferably, the first coating extends from the first face (inlet end) for at least 60% of a length of the first plurality of channels, more preferably for at least 70% of a length of the first plurality of channels, even more preferably for at least 80% of a length of the first plurality of channels, still more preferably for at least 90% of a length of the first plurality of channels.

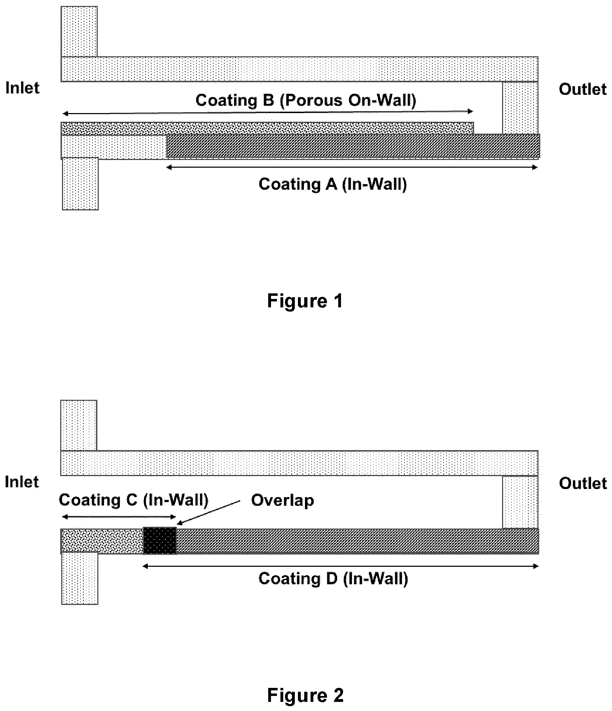

An example of such a configuration is shown in Figure 1. That is, by "disposed on the first plurality of inner surfaces" it is meant that the first coating is directly disposed on the first plurality of inner surfaces, i.e., as an "on-wall" coating. Of course, it may happen that a small amount of the first coating (such as during manufacture of the catalyst article, when in the form of a first washcoat slurry) may penetrate into the surface pores of the wall-flow filter substrate during coating. However, this should be avoided as much as possible. Preferably, in this embodiment, at least 80 wt.% of the first coating is on the first plurality of inner surfaces, more preferably at least 90 wt.%, still more preferably at least 95 wt.%. Preferably, the wall-flow filter substrate has a channel wall thickness and the first coating penetrates to less than 10%, more preferably less than 5% of the channel wall thickness at any given point.

The pores of the porous coating may be formed by a pore-forming agent, as will be appreciated by the skilled reader.

In such a configuration, the catalytically active material present in the first coating may contact more of the incoming exhaust gas stream while it is hot (i.e., before cooling as it passes through the filter substrate) and therefore be more efficient at converting NO₂, for example. Moreover, since the porous coating may be coated along a significant length of the substrate, it may be less likely that the exhaust gas can bypass the first coating as backpressure in the system increases. Such a configuration may therefore have good reliability in a range of conditions.

Preferably, the loading of the first coating on the wall-flow filter substrate is from 0.1 to 1.5 g/in³, more preferably from 0.2 to 1 g/in³, even more preferably 0.3 to 0.9 g/in³, still more preferably 0.4 to 0.8 g/in³, based on the total volume of the substrate. Such a loading of the first coating, particularly when an "on-wall" coating, has been found to provide particularly good properties as described herein, in particular while avoiding imparting too much backpressure on the system.

In an alternative preferred embodiment, the first coating is disposed within the porous walls and extends from the first face (inlet end) for less than 55% of a length of the first plurality of channels. In other words, the first coating in this embodiment is preferably an "in-wall" coating. Preferably, the first coating extends from the first face (inlet end) for from 5 to 50% of a length of the first plurality of channels, more preferably for from 15 to 45% of a length of the first plurality of channels, even more preferably for from 20 to 40% of a length of the first plurality of channels. Such an arrangement has been found to provide particularly good properties as described herein, in particular while avoiding imparting too much backpressure on the system. An example of such a configuration is shown in Figure 2. When the first coating is provided as an "in-wall" coating, it may be preferred that the coating layer is shorter so as to not result in too much additional backpressure being imparted on the system during use.

Preferably, the loading of the first coating on the wall-flow filter substrate is from 0.1 to 1.5 g/in³, more preferably from 0.2 to 1 g/in³, even more preferably 0.3 to 0.9 g/in³, still more preferably 0.4 to 0.7 g/in³, based on the total volume of the substrate. Such a loading of the first coating, particularly when an "in-wall" coating, has been found to provide particularly good properties as described herein, in particular while avoiding imparting too much backpressure on the system.

Preferably, the first and/or the second coating further comprises alumina, preferably gamma alumina. The alumina may preferably be doped with a dopant, particularly when the coating is an "in-wall" coating, for example. The dopant can be selected from the group consisting of La, Sr, Si, Ba, Y, Pr, Nd, Ce, and mixtures thereof. For example, the dopant can be La and/or Nd. The dopant content in the alumina can be from 1 to 30 wt.%, from 2 to 25 wt.%, or from 3 to 20 wt.%, based on the total weight of the alumina and dopant.

Preferably, when present, the first and/or the second coating comprises from 5 to 25 wt.% of the alumina, relative to the total weight of the respective metal-loaded molecular sieve.

Preferably, the alumina has a D90 of from 1 to 10 µm, more preferably from 2 to 8 µm, even more preferably from 3 to 7 µm, still more preferably from 4 to 5 µm.

Without wishing to be bound by theory, it is thought that the (gamma) alumina may (a) act as a "copper sink", adsorbing and stabilising small amounts of copper that might be released from the Cu-loaded molecular sieve upon aging; (b) help provide the washcoat with the desired rheology; and/or (c) work as a binder.

Preferably, the first and/or the second coating further comprises a binder, such as an (colloidal) aluminium oxide hydroxide (e.g. boehmite) binder, in particular when the first coating comprises an "on-wall" coating as described herein. Suitable binders are known to the skilled reader.

Preferably, the first coating comprises at least 70 wt.% of the Fe-loaded molecular sieve having an FER Framework Type, more preferably at least 80 wt.% of the Fe-loaded molecular sieve having an FER Framework Type, based on the total weight of the first coating.

Preferably, the second coating comprises at least 70 wt.% of the Cu-loaded molecular sieve having a CHA Framework Type and/or the Cu-loaded molecular sieve having an AEI Framework Type, more preferably at least 80 wt.% of the Cu-loaded molecular sieve having a CHA Framework Type and/or the Cu-loaded molecular sieve having an AEI Framework Type, based on the total weight of the second coating.

In a further aspect, the present invention provides a method of manufacturing a catalyst article for the treatment of exhaust gas, the method comprising:
providing a wall-flow filter substrate having porous walls and having a first face and a second face defining a longitudinal direction therebetween from an inlet end to an outlet end of the catalyst article and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
providing a first washcoat slurry comprising an Fe-loaded molecular sieve having an FER Framework Type;
providing a second washcoat slurry comprising a Cu-loaded molecular sieve having a CHA Framework Type and/or a Cu-loaded molecular sieve having an AEI Framework Type;
coating the wall-flow filter substrate with the second washcoat slurry from the second face to form a second coating disposed on the second plurality of inner surfaces and/or within the porous walls, and extending from the second face;
coating the wall-flow filter substrate with the first washcoat slurry from the first face to form a first coating disposed on the first plurality of inner surfaces and/or within the porous walls, and extending from the first face; and
calcining the first coating and the second coating to form the catalyst article.

As will be appreciated by the skilled reader, the advantages and preferable features of the above aspect apply equally to this aspect, unless specified otherwise.

As will be appreciated by the skilled reader in view of the context of the invention, the first washcoat slurry and the second washcoat slurry as described herein are therefore distinct from one another.

Each washcoat slurry typically comprises a solvent. Water and organic solvents (methanol, ethanol, propanol, and the like) or their mixtures can be used. Preferably, the solvent comprises, more preferably is, water. In other words, the washcoat slurry is preferably an aqueous slurry. The term "washcoat slurry" as used herein is a term of art and typically refers to a suspension, preferably an aqueous suspension, of the components of the washcoat slurry.

Providing the first washcoat slurry preferably comprises combining the Fe-loaded molecular sieve having an FER Framework Type with a solvent and, optionally, mixing the washcoat slurry. Providing the second washcoat slurry preferably comprises combining the Cu-loaded molecular sieve having a CHA Framework Type and/or a Cu-loaded molecular sieve having an AEI Framework Type with a solvent and, optionally, mixing the washcoat slurry.

Preferably, the first and/or the second washcoat slurry further comprises alumina, as described with reference to the first aspect. Preferably, the first and/or the second washcoat slurry further comprises a binder, as described with reference to the first aspect.

The techniques for coating the wall-flow filter substrate with a washcoat slurry to form a coating as described herein are known in the art. One suitable coating procedure is described in WO1999047260. A washcoat slurry can be coated to the wall-flow filter substrate from the inlet face, from the outlet face, or from both the inlet face and the outlet face, as applicable.

If more than one coating is being applied, then it may be preferable to dry and/or calcine the wall-flow filter substrate containing one coating before another coating is applied. Calcining may be preceded by a drying step at a lower temperature (such as 100 to 200°C). Calcining is routine in the art and may be performed under usual conditions. For example, calcining the first coating and the second coating to form the catalyst article preferably comprises heating the first coating and the second coating (i.e. by heating the substrate comprising the first coating and the second coating thereon) at a temperature of from 400 to 600°C for from 30 minutes to 4 hours, preferably in a rotational oven (i.e., dynamic calcination) or static oven (i.e., static calcination). The heating may be carried out in air or in an inert atmosphere, typically in air.

The provided wall-flow filter substrate may comprise a coated wall-flow filter substrate, i.e., one already having a coating disposed thereon, or, preferably, a "blank", i.e., uncoated, wall-flow filter substrate.

Preferably, the method comprises coating the wall-flow filter substrate with the second washcoat slurry prior to coating the wall-flow filter substrate with the first washcoat slurry, more preferably wherein the wall-flow filter substrate is dried between coating the wall-flow filter substrate with the second washcoat slurry and coating the wall-flow filter substrate with the first washcoat slurry. The term "dried" as used herein may encompass heating the wall-flow filter substrate to at least partially dry any coating thereon. For example, drying the wall-flow filter substrate may comprise heating the wall-flow filter substrate to from 5 to 150°C for from 5 minutes to 60 minutes.

Preferably, coating the wall-flow filter substrate with the second washcoat slurry comprises coating the wall-flow filter substrate with the second washcoat slurry from the second face to form a second coating disposed within the porous walls and extending from the second face (outlet end) for at least 50% of a length of the second plurality of channels, i.e., as an "in-wall" coating.

Preferably, the first washcoat slurry comprises a pore-forming agent and coating the wall-flow filter substrate with the first washcoat slurry comprises coating the wall-flow filter substrate with the first washcoat slurry from the first face to form a first coating disposed on the first plurality of inner surfaces and extending from the first face (inlet end) for at least 50% of a length of the first plurality of channels, i.e., as an "on-wall" coating.

Preferably, the pore-forming agent comprises an organic pore-forming agent.

Suitable organic pore-forming agents are known in the art. The organic pore-forming agent may be selected from the group consisting of cellulose, polyethylene, starch, graphite, polypropylene, polyaramide, polytetrafluoroethylene, polystyrene, polymethyl methacrylate (PMMA), and mixtures thereof. The source of the cellulose may, for instance, be cellulose powder or cellulose fibers. Commercially available organic pore-forming agents include Arbocel^{®} (such as Arbocel^{®} UFC 100), Vivapur^{®}, Mipelon^{™} PM-200, Propyltex^{®}, Orgasol^{®}, and Remyrise^{®}.

The organic pore-forming agent may have a Dv50 in a range of from 1 to 30 µm, preferably from 2 to 25 µm, more preferably from 3 to 20 µm, even more preferably from 4 to 18 µm, and most preferably from 6 to 12 µm.

In some embodiments, the organic pore-forming agent is cellulose obtained from a cellulose powder. Preferably, the cellulose powder has a Dv50 in the range of 6 to 12 µm.

Preferably, the first washcoat slurry comprises from 40 to 70 wt.% of the pore-forming agent, more preferably from 50 to 60 wt.% of the pore-forming agent, relative to the total weight of the Fe-loaded molecular sieve having an FER Framework Type.

In an alternative embodiment, coating the wall-flow filter substrate with the first washcoat slurry comprises coating the wall-flow filter substrate with the first washcoat slurry from the first face to form a first coating disposed within the porous walls and extending from the first face (inlet end) for less than 55% of a length of the first plurality of channels, i.e., as an "in-wall" coating.

In a further aspect, the present invention provides a catalyst article obtained or obtainable by the method of the above aspect. As will be appreciated by the skilled reader, the advantages and preferable features of the above aspects apply equally to this aspect, unless specified otherwise.

In a further aspect, the present invention provides an emission treatment system for the treatment of exhaust gas, wherein the emission treatment system comprises the catalyst article described herein. As will be appreciated by the skilled reader, the advantages and preferable features of the above aspects apply equally to this aspect, unless specified otherwise.

Preferably, the emission treatment system is for the treatment of exhaust gas from a diesel engine. Preferably, the system comprises an internal combustion engine, preferably a diesel engine, upstream of the catalyst article. As will be appreciated, the first face of the catalyst article will be placed in an upstream direction in the emission treatment system.

Preferably, the emission treatment system is for the treatment of exhaust gas from an H₂ internal combustion engine. Preferably, the system comprises an internal combustion engine, preferably an H₂ internal combustion engine, upstream of the catalyst article. As will be appreciated, the first face of the catalyst article will be placed in an upstream direction in the emission treatment system.

Preferably, the emission treatment system further comprises an SCR catalyst, which may be positioned upstream or downstream of the catalyst article described herein. Preferably, the emission treatment system further comprises one or more injectors of a source of ammonia, such as urea, preferably wherein at least one of the injectors of a source of ammonia is positioned upstream of the catalyst article described herein, most preferably wherein each injector of a source of ammonia is positioned upstream of the catalyst article described herein. In other words, preferably, the emission treatment system does not comprise an injector of a source of ammonia positioned downstream of the catalyst article described herein. This is so that the catalyst article can capture any urea-derived particulate (along with any soot and ash particulate), for example.

In a further aspect, the present invention provides a method for treating an exhaust gas, the method comprising:
providing the catalyst article described herein or the emission treatment system described herein; and
contacting the catalyst article with an exhaust gas.

As will be appreciated by the skilled reader, the advantages and preferable features of the above aspects apply equally to this aspect, unless specified otherwise.

Preferably, the method is for the treatment of exhaust gas from a diesel engine. In an alternative preferred embodiment, the method is for the treatment of exhaust gas from an H₂ internal combustion engine.

Typically, contacting the catalyst article with an exhaust gas may comprise flowing the exhaust gas through the catalyst article.

### EXAMPLES

The invention will now be described in relation to the following non-limiting examples.

### General catalyst preparation 1 [first dose (for second coating described herein) in-wall rear and second dose (for first coating described herein) on-wall front]:

An example of such a configuration is shown in Figure 1.

First dose - in-wall rear ("Coating A" in Figure 1): a slurry of the metal-zeolite was milled to target particle size distribution characterised by D90=3.8-3.9 µm and stirred overnight. The milled slurry was adjusted to target pH 9.9-10.2 by addition of tetraethylammonium hydroxide aqueous solution and stirred for 5 minutes. Finally, a low particle size mixed oxide containing Al₂O₃ (91.2 wt.%) / La₂O₃ (4.8 wt.%) / Nd₂O₃ (4.1 wt.%), with particle size distribution characterised by D90=3.0-5.0 µm, was added under high speed stirring to target 11 wt.% with respect to the metal-zeolite calcined weight. The washcoat with the composition above was stirred overnight, then re-adjusted to pH 9.9-10.2 by addition of tetraethylammonium hydroxide aqueous solution. The pH-adjusted washcoat was stirred for 30 minutes and coated from the rear end of a suitable DPF, to a target washcoat loading of 1.5 g/in³ with reference to the volume of the finished catalyst and a coating depth of 80%. The brick was dried at 110°C for 20 minutes.

Second dose - porous on-wall front ("Coating B" in Figure 1): A slurry of the metal-zeolite was milled to target particle size distribution characterised by D90=3.8-3.9 µm and stirred overnight. The slurry was transferred in a chiller tank, and colloidal aluminium oxide hydroxide (boehmite) was added under high speed stirring to target 18 wt.% with respect to the metal-zeolite calcined weight. The mixture was stirred for 30 minutes, then a cellulose pore-forming agent (Arbocel UFC100) was added under high speed stirring to target 54 wt.% with respect to the metal-zeolite calcined weight. The mixture was stirred for 30 minutes, then a cellulose thickener was added under high speed stirring to target 0.4 wt.% with respect to full weight of the wet washcoat. The mixture was stirred for 30 minutes at high speed, then the washcoat was stored in a sealed container for 2 days.

The washcoat was then stirred for 3 minutes at high speed, and coated from the front end of the mid-processed DPF containing the dry "First dose - in-wall rear" described above, to a target washcoat loading of 0.6 g/in³ with reference to the volume of the finished catalyst and a coating depth of 90%. The brick was dried at 110°C for 30 minutes and then calcined at 500°C for 2 hours.

### General catalyst preparation 2 [first dose (for second coating described herein) in-wall rear and second dose (for first coating described herein) in-wall front]:

An example of such a configuration is shown in Figure 2. A localised coating with on-wall character protrudes into the inlet channels in correspondence of any overlap between the two doses.

First dose - in-wall rear ("Coating C" in Figure 2): a slurry of the metal-zeolite was milled to target particle size distribution characterised by D90=3.8-3.9 µm and stirred overnight. The milled slurry was adjusted to target pH 9.9-10.2 by addition of tetraethylammonium hydroxide aqueous solution and stirred for 5 minutes. Finally, a low particle size mixed oxide containing Al₂O₃ (91.2 wt.%) / La₂O₃ (4.8 wt.%) / Nd₂O₃ (4.1 wt.%), with particle size distribution characterised by D90=3.0-5.0 µm, was added under high speed stirring to target 11 wt.% with respect to the metal-zeolite calcined weight. The washcoat with the composition above was stirred overnight, then re-adjusted to pH 9.9-10.2 by addition of tetraethylammonium hydroxide aqueous solution. The pH-adjusted washcoat was stirred for 30 minutes and coated from the rear end of a suitable DPF, to a target washcoat loading of 1.58 g/in³ with reference to the volume of the finished catalyst and a coating depth of 80%. The brick was dried at 110°C for 20 minutes.

Second dose - in-wall front ("Coating D" in Figure 2): the washcoat described above for "Coating C" was thickened by addition of a cellulose thickener under high speed stirring to a target 0.4 wt.% with respect to full weight of the wet washcoat. The washcoat was stirred for 10 minutes at high speed and then coated from the front end of the mid-processed DPF containing the dry "First dose - in-wall rear" (Coating C) described above, to a target washcoat loading of 0.52 g/in³ with reference to the volume of the finished catalyst and a coating depth of 35%. The brick was dried at 110°C for 20 minutes and then calcined at 500°C for 2 hours.

### Example catalyst articles:

Catalyst articles were manufactured according to the general catalyst preparation methods described above.

### "On-wall" front zone (general catalyst preparation method 1):

1) Cu(3.3 wt. %)SSZ-13 in-wall rear / Cu(3.3 wt. %)SSZ-13 porous on-wall front
2) Cu(3.3 wt.%)SSZ-13 in-wall rear / Fe(3.0 wt.%)Fer* porous on-wall front
3) Fe(3.0 wt.%)Fer in-wall rear / Cu(3.3 wt.%)SSZ-13 porous on-wall front
4) Fe(3.0 wt.%)Fer in-wall rear / Fe(3.0 wt.%)Fer porous on-wall front
*Fer = ferrierite.

### "In-wall" front zone (general catalyst preparation method 2):

5) Cu(3.3 wt.%)SSZ-13 in-wall rear / Cu(3.3 wt.%)SSZ-13 in-wall front
6) Cu(3.3 wt.%)SSZ-13 in-wall rear / Fe(3.0 wt.%)Fer in-wall front

Catalyst articles 2 and 6 are according to the invention and catalyst articles 1, 3, 4 and 5 are comparative examples.

The catalyst articles were subjected to a number of simulations and engine tests, and the results are shown in Tables 1-5.

**Table 1: SCAT NOₓ-Conversion% "NO+NO₂ conditions" - 500ppm NOₓ, NH₃/NOₓ ratio (ANR)=1.5, NO₂/NOₓ=50%, 8% CO₂, 5% H₂O, 10% O₂, Space Velocity (SV)=60,000 s⁻¹**

| **Catalyst Article** | **175 °C** | **200 °C** | **250 °C** | **600 °C** |
|---|---|---|---|---|
| **1** | 75 | 92 | 99 | 88 |
| **2** | 78 | 92 | 98 | 88 |
| **3** | 69 | 84 | 94 | 88 |
| **4** | 77 | 87 | 90 | 79 |
| **5** | 70 | 89 | 97 | 80 |
| **6** | 70 | 87 | 95 | 82 |

**Table 2: SCAT N₂O-selectivity% "NO+NO₂ conditions" - 500ppm NOₓ, ANR=1.5, NO₂/NOₓ=50%, 8% CO₂, 5% H₂O, 10% O₂, SV=60,000 s⁻¹**

| **Catalyst Article** | **175 °C** | **200 °C** | **250 °C** | **600 °C** |
|---|---|---|---|---|
| **1** | 4.4 | 5.3 | 6.0 | 9.2 |
| **2** | 3.0 | 3.4 | 5.6 | 3.5 |
| **3** | 1.8 | 3.2 | 5.2 | 2.3 |
| **4** | 1.1 | 1.9 | 4.1 | 0.3 |
| **5** | 4.5 | 5.2 | 7.0 | 9.5 |
| **6** | 4.0 | 4.2 | 5.8 | 5.7 |

**Table 3: SCAT NOₓ-Conversion% "NO-Only conditions" - 500ppm NOₓ, ANR=1.5, NO₂/NOₓ=0%, 8% CO₂, 5% H₂O, 10% O₂, SV=60,000 s⁻¹**

| **Catalyst Article** | **200 °C** | **600 °C** |
|---|---|---|
| **1** | 76 | 86 |
| **2** | 62 | 85 |
| **3** | 31 | 83 |
| **4** | 4 | 69 |
| **5** | 70 | 80 |
| **6** | 59 | 79 |

**Table 4: SCAT N20-selectivity% "NO-Only conditions" - 500ppm NOₓ, ANR=1.5, NO₂/NOₓ=0%, 8% CO₂, 5% H₂O, 10% O₂, SV=60,000 s⁻¹**

| **Catalyst Article** | **200 °C** | **600 °C** |
|---|---|---|
| **1** | 3.4 | 7.2 |
| **2** | 2.6 | 3.9 |
| **3** | 1.6 | 1.3 |
| **4** | 4.5 | 0.2 |
| **5** | 3.3 | 7.6 |
| **6** | 2.9 | 6.1 |

**Table 5: Engine Testing - Bench engine cycle targeting real driving emission**

| **Catalyst Article** | **Cumulative NOx-emission / grams** | **Cumulative N2O-emission / grams** | **Cumulative NH3-emission / grams** |
|---|---|---|---|
| **1** | 14 | 0.42 | 1.2 |
| **2** | 17 | 0.28 | 1.9 |
| **3** | 19 | 0.34 | 3.4 |
| **4** | 28 | 0.07 | 7.2 |

As can be seen in a comparison of Tables 1-5, compared to catalyst articles 1, 3, 4 and 5, catalyst articles 2 and 6 achieve a good balance of high NO₂ conversion, high overall NOₓ conversion and low NH₃ slip, while having good N₂O selectivity, at both low and high temperatures. The term "good N₂O selectivity" as used herein means that the catalyst article shows low selectivity to the formation of N₂O after flowing the exhaust gas through the catalyst article. This is because, for example, catalyst articles 3 and 4 show poor performance at low temperatures in NO-only conditions (Tables 3 and 4) (whereas catalyst article 2 shows better performance), while catalyst article 2 shows excellent performance in high NO₂ conditions at low temperatures (Tables 1 and 2) while also showing lower selectivity to N₂O (whereas catalyst article 1 shows poor N₂O selectivity). Moreover, as can be seen in Table 5, catalyst article 2 shows the best overall performance, in that it shows the lowest N₂O-make while still achieving good NOₓ conversion and low NH₃ slip.

Similar results can be seen in a comparison of catalyst articles 5 and 6, where the N₂O selectivity for catalyst article 5 is poor compared to that of catalyst article 6.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A catalyst article for the treatment of exhaust gas, the catalyst article comprising:
a wall-flow filter substrate having porous walls and having a first face and a second face defining a longitudinal direction therebetween from an inlet end to an outlet end of the catalyst article and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
a first coating disposed on the first plurality of inner surfaces and/or within the porous walls, and extending from the first face; and
a second coating disposed on the second plurality of inner surfaces and/or within the porous walls, and extending from the second face;
wherein the first coating comprises an Fe-loaded molecular sieve having an FER Framework Type and the second coating comprises a Cu-loaded molecular sieve having a CHA Framework Type and/or a Cu-loaded molecular sieve having an AEI Framework Type.

2. The catalyst article of claim 1, wherein the catalyst article is a diesel particulate filter (DPF).

3. The catalyst article of claim 1 or claim 2, wherein the molecular sieve having an FER Framework Type comprises ferrierite; and/or
wherein the molecular sieve having a CHA Framework Type comprises a synthetic CHA aluminosilicate molecular sieve and/or a synthetic CHA aluminophosphate molecular sieve, more preferably SSZ-13; and/or
wherein the molecular sieve having an AEI Framework Type comprises a synthetic AEI aluminosilicate molecular sieve and/or a synthetic aluminophosphate AEI molecular sieve, more preferably SSZ-39.

4. The catalyst article of any preceding claim, wherein the Fe-loaded molecular sieve having an FER Framework Type comprises from 1 to 5 wt.% Fe, based on the total weight of the Fe and the molecular sieve.

5. The catalyst article of any preceding claim, wherein the Cu-loaded molecular sieve having a CHA Framework Type and/or the Cu-loaded molecular sieve having an AEI Framework Type comprises from 1 to 5 wt.% Cu, based on the total weight of the Cu and the molecular sieve.

6. The catalyst article of any preceding claim, wherein the second coating is disposed within the porous walls and extends from the second face for at least 50% of a length of the second plurality of channels.

7. The catalyst article of claim 6, wherein the loading of the second coating on the wall-flow filter substrate is from 0.5 to 3 g/in³, based on the total volume of the substrate.

8. The catalyst article of any preceding claim, wherein the first coating is porous, is disposed on the first plurality of inner surfaces and extends from the first face for at least 50% of a length of the first plurality of channels.

9. The catalyst article of claim 8, wherein the loading of the first coating on the wall-flow filter substrate is from 0.1 to 1.5 g/in³, based on the total volume of the substrate.

10. The catalyst article of any of claims 1 to 6, wherein the first coating is disposed within the porous walls and extends from the first face for less than 55% of a length of the first plurality of channels.

11. The catalyst article of claim 10, wherein the loading of the first coating on the wall-flow filter substrate is from 0.1 to 1.5 g/in³, based on the total volume of the substrate.

12. The catalyst article of any preceding claim, wherein the first and/or the second coating further comprises alumina.

13. A method of manufacturing a catalyst article for the treatment of exhaust gas, the method comprising:
providing a wall-flow filter substrate having porous walls and having a first face and a second face defining a longitudinal direction therebetween from an inlet end to an outlet end of the catalyst article and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
providing a first washcoat slurry comprising an Fe-loaded molecular sieve having an FER Framework Type;
providing a second washcoat slurry comprising a Cu-loaded molecular sieve having a CHA Framework Type and/or a Cu-loaded molecular sieve having an AEI Framework Type;
coating the wall-flow filter substrate with the second washcoat slurry from the second face to form a second coating disposed on the second plurality of inner surfaces and/or within the porous walls, and extending from the second face;
coating the wall-flow filter substrate with the first washcoat slurry from the first face to form a first coating disposed on the first plurality of inner surfaces and/or within the porous walls, and extending from the first face; and
calcining the first coating and the second coating to form the catalyst article.

14. An emission treatment system for the treatment of exhaust gas, wherein the emission treatment system comprises the catalyst article of any of claims 1 to 12.

15. A method for treating an exhaust gas, the method comprising:
providing the catalyst article of any of claims 1 to 12 or the emission treatment system of claim 14; and
contacting the catalyst article with an exhaust gas.
